# EUROPEAN PATENT APPLICATION

(11) **EP 2 287 576 A1**
(43) Date of publication of application: **23.02.2011**
(21) Application number: 09746528.0
(22) Date of filing: 07.05.2009
(51) Int. Cl.: G01J 3/18, G02B 7/00

(54) **SPECTRAL MODULE**

(30) Priority: 15.05.2008 JP 2008128693
(71) Applicant: Hamamatsu Photonics K.K., Hamamatsu-shi, Shizuoka 435-8558 (JP)
(72) Inventor: SHIBAYAMA Katsumi, Hamamatsu-shi Shizuoka 435-8558 (JP); YOKINO Takafumi, Hamamatsu-shi Shizuoka 435-8558 (JP)
(74) Representative: HOFFMANN EITLE
(86) International application number: PCT/JP2009/058638
(87) International publication number: WO 2009/139321

(57) **Abstract**

The present invention provides a highly reliable spectral module. The spectral module (1) of the present invention comprises a substrate (2) for transmitting therethrough light incident on one surface (2a); a lens unit (3), having an entrance surface (3a) opposing the other surface (2b) of the substrate (2), for transmitting therethrough the light entering from the entrance surface (3a) after passing through the substrate (2); a spectroscopic unit (4), formed with the lens unit (3), for spectrally resolving and reflecting the light having entered the lens unit (3); a photodetector (4) for detecting the light reflected by the spectroscopic unit (4); and a support unit (8), disposed between the other surface (2b) and the entrance surface (3a), for supporting the lens unit (3) against the substrate (2). Since the support unit (8) forms a gap between the other surface (2b) and the entrance surface (3a) in the spectral module (1), the other surface (2b) and the entrance surface (3a) are prevented from coming into contact with each other and causing damages, whereby the spectral module (1) can improve its reliability.

## Description

### Technical Field

The present invention relates to a spectral module for spectrally resolving and detecting light.

### Background Art

Known as a conventional spectral module is one equipped with a block-shaped support which is a biconvex lens having one convex surface provided with a spectroscopic unit such as a diffraction grating and the other convex surface side provided with a photodetector such as a photodiode (see, for example, Patent Literature 1). In such a spectral module, light incident on the other convex surface side is spectrally resolved by the spectroscopic unit, while the spectrally resolved light is detected by the photodetector.

### Citation List

### Patent Literature

Patent Literature 1: Japanese Patent Application Laid-Open No. 4-294223

### Summary of Invention

### Technical Problem

When mounting the spectroscopic unit to the support in a spectral module such as the one mentioned above, a photocurable optical resin agent is often used for bonding one surface of the spectroscopic unit to the one convex surface of the support. In this case, after the resin agent is applied to the convex surface of the support, the spectroscopic unit is moved to and fro along the convex surface while being pressed thereagainst, so as to be smeared well with the resin agent, and bonded to the support with high precision. When thus bonding the spectroscopic unit to the support, however, the spectroscopic unit and the support may come into contact with each other, thereby causing damages. When damages occur in the spectroscopic unit and optical paths in the support, light is scattered by the damages, which is problematic in that the spectral module lowers its reliability.

In view of such circumstances, it is an object of the present invention to provide a spectral module having high reliability.

### Solution to Problem

For achieving the above-mentioned object, the spectral module in accordance with the present invention comprises a substrate for transmitting therethrough light incident on one surface thereof; a lens unit, having an entrance surface opposing the other surface of the substrate, for transmitting therethrough the light entering from the entrance surface after passing through the substrate; a spectroscopic unit, formed with the lens unit, for spectrally resolving and reflecting the light having entered the lens unit; a photodetector, disposed on the one surface side of the substrate, for detecting the light reflected by the spectroscopic unit; and a support unit for supporting the lens unit against the substrate so as to separate the other surface and the entrance surface from each other.

When mounting the lens unit to the substrate in this spectral module, the support unit forms a gap between the other surface of the substrate and the entrance surface of the lens unit, whereby the other surface of the substrate and the entrance surface of the lens unit can be prevented from coming into contact with each other and causing damages. Further, since the support unit supports the substrate and lens unit, the entrance surface of the lens unit is positioned while being separated by a predetermined distance from the other surface of the substrate, whereby the lens unit can be mounted to the substrate with high precision. Therefore, the reliability of the spectral module can be improved.

Preferably, in the spectral module in accordance with the present invention, the entrance surface is provided with a first recess having a predetermined positional relationship with the spectroscopic unit, while the support unit is disposed on the other surface side of the substrate so as to have a predetermined positional relationship with a reference unit for positioning the photodetector with respect to the substrate and mated with the first recess. In such a structure, the support unit has a predetermined positional relationship with the reference unit for positioning the photodetector with respect to the substrate, whereby simply mating the support unit with the first recess provided in the entrance surface of the lens unit positions the photodetector with respect to the lens unit. Here, the first recess has a predetermined positional relationship with the spectroscopic unit, whereby the spectroscopic unit and the photodetector can readily be aligned with each other. Therefore, this spectral module can be assembled easily.

Preferably, in the spectral module in accordance with the present invention, the other surface is provided with a second recess having a predetermined positional relationship with a reference unit for positioning the photodetector with respect to the substrate, while the support unit is disposed on the entrance surface side of the lens unit so as to have a predetermined positional relationship with the spectroscopic unit and mated with the second recess. In such a structure, the support unit has a predetermined positional relationship with the spectroscopic unit, whereby simply mating the support unit with the second recess provided in the other surface of the substrate positions the spectroscopic unit with respect to the substrate. Here, the second recess has a predetermined positional relationship with the reference unit for positioning the photodetector with respect to the substrate, whereby the spectroscopic unit and the photodetector can readily be aligned with each other. Therefore, this spectral module can be assembled easily.

Preferably, in the spectral module in accordance with the present invention, the support unit extends in a direction substantially coinciding with an extending direction of a grating groove in the spectroscopic unit. In such a structure, when positioning the lens unit with respect to the substrate, the lens unit and the photodetector are aligned accurately with each other in a direction substantially orthogonal to the extending direction of the grating groove, so that the light spectrally resolved by the spectroscopic unit can precisely be made incident on the photodetector, whereby the reliability of the spectral module can further be improved.

### Advantageous Effects of Invention

The present invention can improve the reliability of the spectral module.

### Brief Description of Drawings

**[****Fig. 1****]** is a plan view of the spectral module in accordance with an embodiment of the present invention;
**[****Fig. 2****]** is a sectional view taken along the line II-II of Fig. 1;
**[****Fig. 3****]** is a schematic assembly view of the spectral module;
**[****Fig. 4****]** is a perspective view illustrating a lens unit;
**[****Fig. 5****]** is a schematic assembly view corresponding to Fig. 3 and illustrating the spectral module in accordance with a second embodiment;
**[****Fig. 6****]** is a sectional view corresponding to Fig. 2 and illustrating a modified example of the spectral module in accordance with the second embodiment;
**[****Fig. 7****]** is a perspective view corresponding to Fig. 4 and illustrating the spectral module in accordance with a third embodiment;
**[****Fig. 8****]** is a schematic assembly view corresponding to Fig. 3 and illustrating the spectral module in accordance with a fourth embodiment;
**[****Fig. 9****]** is a perspective view illustrating the lens unit in accordance with the fourth embodiment;
**[****fig. 10****]** is a schematic assembly view corresponding to Fig. 3 and illustrating the spectral module in accordance with a fifth embodiment;
**[****Fig. 11****]** is a perspective view illustrating the lens unit in accordance with the fifth embodiment; and
**[****Fig. 12****]** is a schematic assembly view corresponding to Fig. 3 and illustrating the spectral module in accordance with a modified example of the fifth embodiment.

### Description of Embodiments

In the following, preferred embodiments of the spectral module in accordance with the present invention will be explained in detail with reference to the drawings. In the drawings, the same or equivalent parts will be referred to with the same signs while omitting their overlapping descriptions.

### First Embodiment

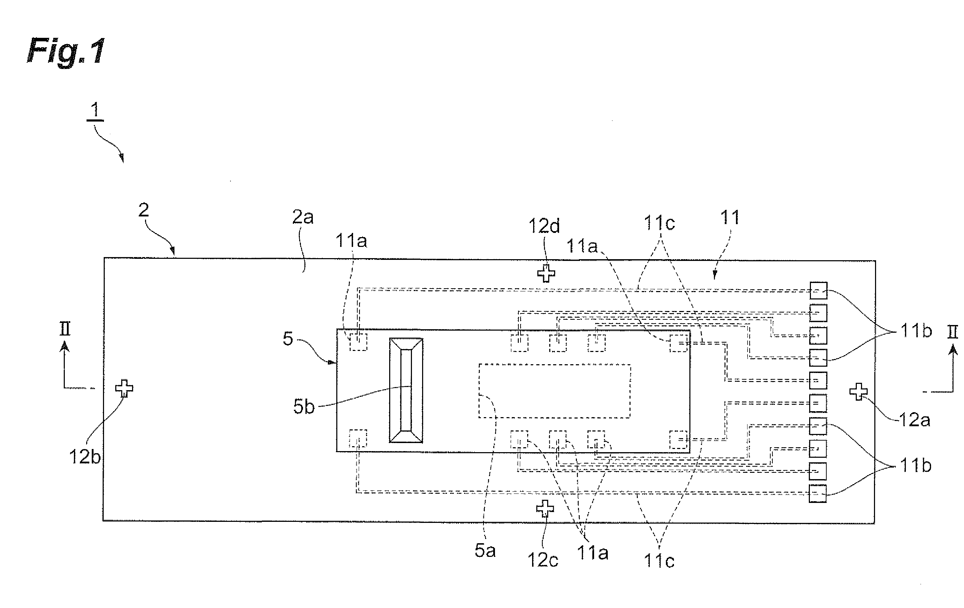

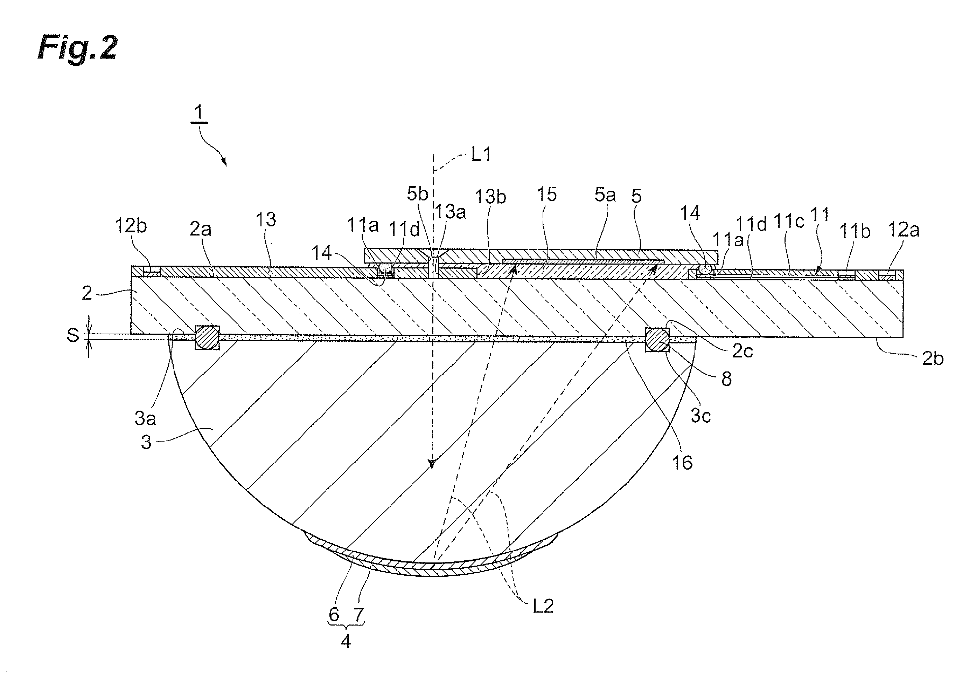

As illustrated in Figs. 1 and 2, a spectral module 1 comprises a substrate 2 which transmits therethrough light L1 incident on its front face (one surface) 2a, a lens unit 3 which transmits the light L1 entering from an entrance surface 3a after passing through the substrate 2, a spectroscopic unit 4 which spectrally resolves and reflects the light L1 having entered the lens unit 3, and a photodetector 5 which detects light L2 reflected by the spectroscopic unit 4. The spectral module 1 is a micro spectral module which spectrally resolves the light L1 with the spectroscopic unit 4 into a plurality of beams of light L2 and detects the light L2 with the photodetector 5, thereby measuring a wavelength distribution of the light L1, the intensity of a specific wavelength component, and the like.

The substrate 2 is formed into a rectangular plate (e.g., with a full length of 15 to 20 mm, a full width of 11 to 12 mm, and a thickness of 1 to 3 mm) from any of light transmitting glass materials such as BK7, Pyrex (registered trademark), and silica, plastics, and the like. The front face 2a of the substrate 2 is formed with a wiring pattern 11 made of a monolayer film of A1, Au, or the like or a multilayer film of Cr-Pt-Au, Ti-Pt-Au, Ti-Ni-Au, Cr-Au, or the like. The wiring pattern 11 has a plurality of pad units 11a arranged in a center portion of the substrate 2, a plurality of pad units 11b arranged in one longitudinal end portion of the substrate 2, and a plurality of connection units 11c for connecting the corresponding pad units 11 a, 11b to each other. The wiring pattern 11 also has an antireflection layer 11d made of a monolayer film of CrO or the like or a multilayer film of Cr-CrO or the like on the front face 2a side of the substrate 2.

The front face 2a of the substrate 2 is formed with cross-shaped alignment marks (reference units) 12a, 12b, 12c, 12d, having a structure similar to that of the wiring pattern 11, for positioning the photodetector 5 with respect to the substrate 2. The alignment marks 12a, 12b are formed in both longitudinal end portions of the substrate 2, respectively, each being disposed at a center position in a direction substantially orthogonal to the longitudinal direction of the substrate 2. The alignment marks 12c, 12d are formed in both end portions in a direction substantially orthogonal to the longitudinal direction of the substrate 2, respectively, each being disposed at a center position in the longitudinal direction of the substrate 2.

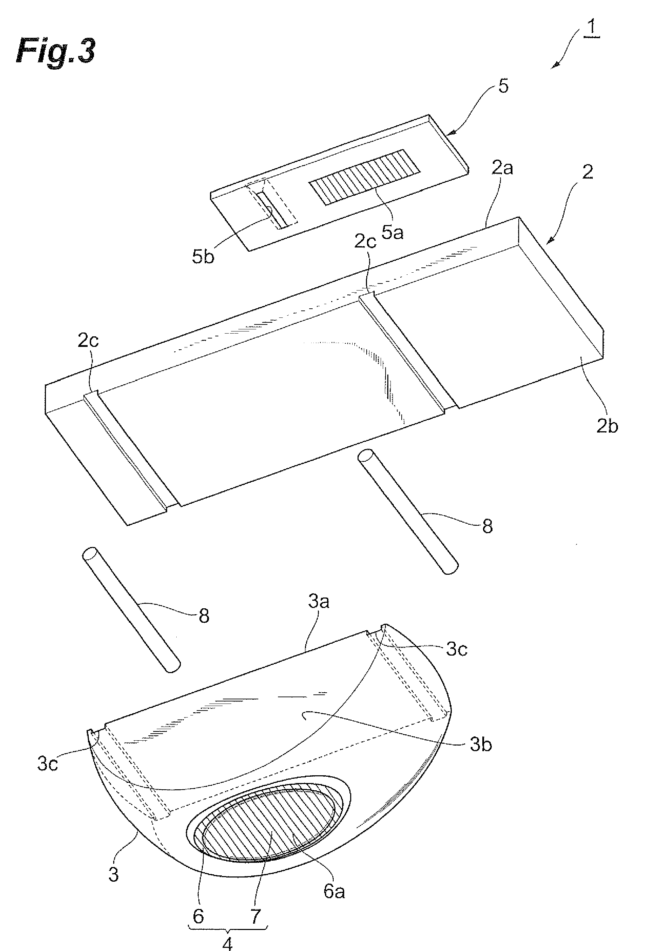

As illustrated in Figs. 2 and 3, the rear face (the other surface) 2b of the substrate 2 is provided with two rows of recesses (second recesses) 2c each having a rectangular cross section (e.g., with a width of 50 to 500 µm and a depth of 50 to 200 µm) extending in a direction substantially orthogonal to the longitudinal direction of the substrate 2. The recesses 2c, each of which is constituted by a substantially rectangular bottom face parallel to the rear face 2b and side walls, substantially perpendicular to the bottom face, extending in a direction substantially orthogonal to the longitudinal direction of the substrate 2, are formed by etching so as to have predetermined positional relationships with the alignment marks 12a, 12b, 12c, 12d.

Rod-shaped support units 8 are mated with the respective recesses 2c. Each support unit 8, which is a member for supporting the lens unit 3 with respect to the substrate 2 so as to separate the rear face 2b of the substrate 2 and the entrance surface 3a of the lens unit 3 from each other, is formed with a circular cross section (e.g., with a diameter of 0.1 to 1.0 mm) from any of the same material as that of the substrate 2, light transmitting glass materials such as silica, plastics, and the like. For example, optical fibers may be used for the support units 8. The support units 8 are partly mated with their corresponding recesses 2c of the substrate 2 and project in the thickness direction of the substrate 2.

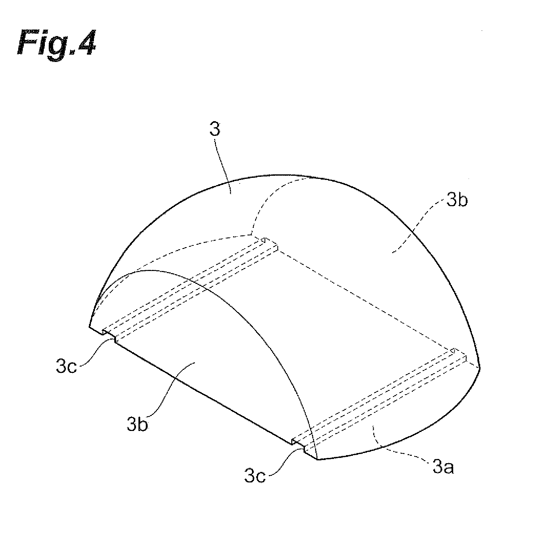

As illustrated in Fig. 4, the lens unit 3 is made of any of the same material as that of the substrate 2, light transmitting resins, light transmitting inorganic/organic hybrid materials, low melting glass materials for shaping a replica, plastics, and the like into such a form that a semispherical lens is cut off by two planes substantially parallel to each other and substantially orthogonal to its entrance surface (bottom face) 3a so as to form side faces 3b (e.g., the form with a radius of 6 to 10 mm, a height of 5 to 8 mm, and the bottom face 3a having a full length of 12 to 18 mm and a full width (distance between the side faces 3b) of 6 to 10 mm), and functions as a lens for focusing the light L2 spectrally resolved by the spectroscopic unit 4 onto a light detection section 5a of the photodetector 5.

As illustrated in Figs. 2 to 4, the entrance surface 3a of the lens unit 3 is provided with two rows of recesses (first recesses) 3c each having a rectangular cross section (e.g., with a width of 50 to 500 µm and a depth of 50 to 200 µm) adapted to mate with its corresponding support unit 8. The recesses 3c, each of which is constituted by a substantially rectangular upper face parallel to the entrance surface 3a and side walls, substantially perpendicular to the upper face, extending in a direction substantially orthogonal to the side faces 3b, are formed by dicing or the like so as to have predetermined positional relationships with the spectroscopic unit 4. The recesses 3c of the lens unit 3 and the recesses 2c of the substrate 2 are disposed at positions which do not obstruct paths of the light L1, L2.

The lens unit 3 is supported by the support units 8 such that the entrance surface 3a opposes the rear face 2b of the substrate 2, while a substantially uniform gap S (e.g., 10 to 100 µm) is formed in the thickness direction of the substrate 2 between the entrance surface 3a of the lens unit 3 and the rear face 2b of the substrate 2. This gap S is filled with an optical resin agent 16.

The spectroscopic unit 4 is a reflection-type grating having a diffraction layer 6 formed on the outer surface of the lens unit 3 and a reflecting layer 7 formed on the outer surface of the diffraction layer 6. The diffraction layer 6 is formed by arranging a plurality of grating grooves 6a in a row along the longitudinal direction of the substrate 2, while the extending direction of the grating grooves 6a substantially coincides with a direction substantially orthogonal to the longitudinal direction of the substrate 2. The diffraction layer 6, which employs blazed gratings with sawtooth cross sections, binary gratings with rectangular cross sections, or holographic gratings with sinusoidal cross sections, for example, is formed by photocuring an optical resin for a replica such as a photocurable epoxy, acrylic, or organic/inorganic hybrid resin. The reflecting layer 7, which is shaped like a film, is formed by vapor-depositing Al, Au, or the like onto the outer surface of the diffraction layer 6, for example.

As illustrated in Figs. 1 and 2, the photodetector 5 is formed into a rectangular plate (e.g., with a full length of 5 to 10 mm, a full width of 1.5 to 3 mm, and a thickness of 0.1 to 0.8 µm). The light detection section 5a of the photodetector 5 is a CCD image sensor, a PD array, a CMOS image sensor, or the like, in which a plurality of channels are arranged in a row along a direction substantially orthogonal to the extending direction of the grating grooves 6a in the spectroscopic unit 4 (i.e., along the arranging direction of the grating grooves 6a). When the light detection section 5a is a CCD image sensor, the intensity information of light at its incident position on two-dimensionally arranged pixels is subjected to line binning, so as to yield light intensity information at one-dimensional positions, and the intensity information at the one-dimensional positions is read in time series. That is, a line of pixels subjected to line binning forms one channel. When the light detection section 5a is a PD array or CMOS image sensor, intensity information of light at its incident position on one-dimensionally arranged pixels is read in time series, whereby one pixel forms one channel. When the light detection section 5a is a PD array or CMOS image sensor in which pixels are arranged two-dimensionally, a line of pixels aligning in a given one-dimensional arrangement direction forms one channel. When the light detection section 5a is a CCD image sensor, one having a channel interval in the arrangement direction of 12.5 µm, a channel full length (length of the one-dimensional pixel row subjected to line binning) of 1 mm, and 256 arrangement channels, for example, is used for the photodetector 5.

The photodetector 5 is also formed with a light transmitting hole 5b, disposed in parallel with the light detection section 5a in a row in the channel arrangement direction, for transmitting the light L1 proceeding to the spectroscopic unit 4. The light transmitting hole 5b, which is a slit (e.g., with a length of 0.5 to 1 mm and a width of 10 to 100 µm) extending in a direction substantially orthogonal to the longitudinal direction of the substrate 2, is formed by etching or the like while being aligned with the light detection section 5a with high precision.

The front face 2a of the substrate 2 is formed with a light absorbing layer 13 exposing the pad units 11a, 11b and alignment marks 12a, 12b, 12c, 12d of the wiring pattern 11, while covering the connection units 11c of the wiring pattern 11. The light absorbing layer 13 is formed with a slit 13a at a position opposing the light transmitting hole 5b of the photodetector 5 so as to transmit therethrough the light L1 proceeding to the spectroscopic unit 4 through the substrate 2 between the recesses 2c, and an opening 13b at a position opposing the light detection section 5a so as to transmit therethrough the light L2 proceeding to the light detection section 5a of the photodetector 5. The light absorbing layer 13 is patterned into a predetermined shape and integrally formed by CrO, a multilayer capacitor film containing CrO, a black resist, or the like.

The pad units 11a exposed from the light absorbing layer 13 are electrically connected to outer terminals of the photodetector 5 by facedown bonding through bumps 14. The pad units 11b are also electrically connected to external electric devices (not depicted). An underfill material 15 which transmits at least the light L2 therethrough is provided on the substrate 2 side of the photodetector 5 (between the photodetector 5 and the substrate 2 or light absorbing layer 13 here), whereby mechanical strength can be maintained.

A method for manufacturing the above-mentioned spectral module 1 will now be explained.

First, the wiring pattern 11 and the alignment marks 12a, 12b, 12c, 12d are patterned on the front face 2a of the substrate 2. Thereafter, the light absorbing layer 13 is patterned such as to expose the pad units 11a, 11b and the alignment marks 12a, 12b, 12c, 12d and form the slit 13a and the opening 13b. The light absorbing layer 13 is formed by photolithography in alignment. By etching, half-cut dicing, laser processing, or the like, the rear face 2b of the substrate 2 is formed with the recesses 2c having predetermined positional relationships with the alignment marks 12a, 12b, 12c, 12d.

The photodetector 5 is mounted on the light absorbing layer 13 by facedown bonding. Here, the photodetector 5 is arranged such that the channel arrangement direction of the light detection section 5a substantially coincides with the longitudinal direction of the substrate 2 while the light detection section 5a faces the front face 2a of the substrate 2, and mounted at a predetermined position based on the alignment marks 12, 12b, 12c, 12d by image recognition.

On the other hand, the lens unit 3 is formed with the spectroscopic unit 4. First, a light transmitting master grating (not depicted) inscribed with gratings corresponding to the diffraction layer 6 is brought into contact with an optical resin for a replica dripped near the vertex of the lens unit 3. Subsequently, the optical resin for a replica is hardened by irradiation with light while in contact with the master grating, so as to form the diffraction layer 6 having a plurality of grating grooves 6a extending in a direction substantially orthogonal to the longitudinal direction of the substrate 2. Preferably, the hardened product is thereafter cured by heating for stabilization. After the optical resin for a replica is hardened, the master grating is released, and aluminum or gold is vapor-deposited on the outer surface of the diffraction layer 6, so as to form the reflecting layer 7 on the outer surface of the diffraction layer 6.

Subsequently, two support units 8 are mated with their corresponding two rows of the recesses 2c in the substrate 2 and two rows of the recesses 3c in the lens unit 3. This arranges the lens unit 3 on the substrate 2 such that the extending direction of the grating grooves 6a in the spectroscopic unit 4 substantially coincides with a direction substantially orthogonal to the longitudinal direction of the substrate 2. Thereafter, the gap S formed between the rear face 2b of the substrate 2 and the entrance surface 3a of the lens unit 3 is filled with the photocurable optical resin agent 16, and the lens unit 3 is moved to and fro along the support units 8, so as to be smeared well with the optical resin agent 16. Then, the optical resin agent 16 is hardened by irradiation with light, so as to mount the lens unit 3 to the substrate 2.

Operations and effects of the above-mentioned spectral module 1 will now be explained.

When mounting the lens unit 3 to the substrate 2 in this spectral module 1, the support units 8 form the gap S between the rear face 2b of the substrate 2 and the entrance surface 3a of the lens unit 3, whereby the rear face 2b of the substrate 2 and the entrance surface 3a of the lens unit 3 can be prevented from coming into contact with each other and causing damages. Further, since the substrate 2 and the lens unit 3 are supported by the support units 8, the rear face 2b of the substrate 2 and the entrance surface 3a of the lens unit 3 form the substantially uniform gap S in the thickness direction of the substrate 2, whereby the lens unit 3 can be mounted to the substrate 2 with high precision. Therefore, the reliability of the spectral module can be improved.

In the spectral module 1, the recesses 2c of the substrate 2 are formed so as to extend in the channel extending direction in the photodetector 5 (a direction substantially orthogonal to the longitudinal direction of the substrate 2), while the recesses 3c of the lens unit 3 are formed so as to extend in the extending direction of the grating grooves 6a in the spectroscopic unit 4. Therefore, mating the support units 8 with the recesses 2c of the substrate 2 and the recesses 3c of the lens unit 3 makes it possible to position the lens unit 3 with respect to the substrate 2 with high precision in the channel arrangement direction in the photodetector 5 (i.e., in the direction of the row of the grating grooves 6a in the spectroscopic unit 4). Hence, the light L2 spectrally resolved by the spectroscopic unit 4 enters appropriate channels without shifting in the channel arrangement direction (channel width direction) in this spectral module 1, whereby the reliability of the spectral module can further be improved.

In the spectral module 1, the recesses 2c of the substrate 2 have predetermined positional relationships with the alignment marks 12a, 12b, 12c, 12d for positioning the photodetector 5 with respect to the substrate 2, while the recesses 3c of the lens unit 3 have predetermined positional relationships with the spectroscopic unit 4. Therefore, simply mating the support units 8 with the recesses 2c of the substrate 2 and the recesses 3c of the lens unit 3 positions the lens unit 3 with respect to the substrate 2 in the thickness and longitudinal directions of the substrate 2, thereby facilitating the alignment between the spectroscopic unit 4 and photodetector 5. Hence, the spectral module 1 can be assembled easily.

In the spectral module 1, since the recesses 2c of the substrate 2 and the recesses 3c of the lens unit 3 open in a direction substantially orthogonal to the longitudinal direction of the substrate 2, the lens unit 3 can be smeared well with the optical resin agent 16 filling the gap S by moving to and fro along the support units 8 at the time of mounting to the substrate 2. Therefore, in the spectral module 1, the lens unit 3 can be smeared well with the optical resin agent 16 at the time of mounting to the substrate 2, so as to inhibit the optical resin agent 16 from becoming lopsided or bubbling in the gap S, whereby the lens unit 3 can be secured more reliably to the substrate 2.

### Second Embodiment

In the spectral module 21 in accordance with the second embodiment, the substrate differs from that of the spectral module 1 in accordance with the first embodiment.

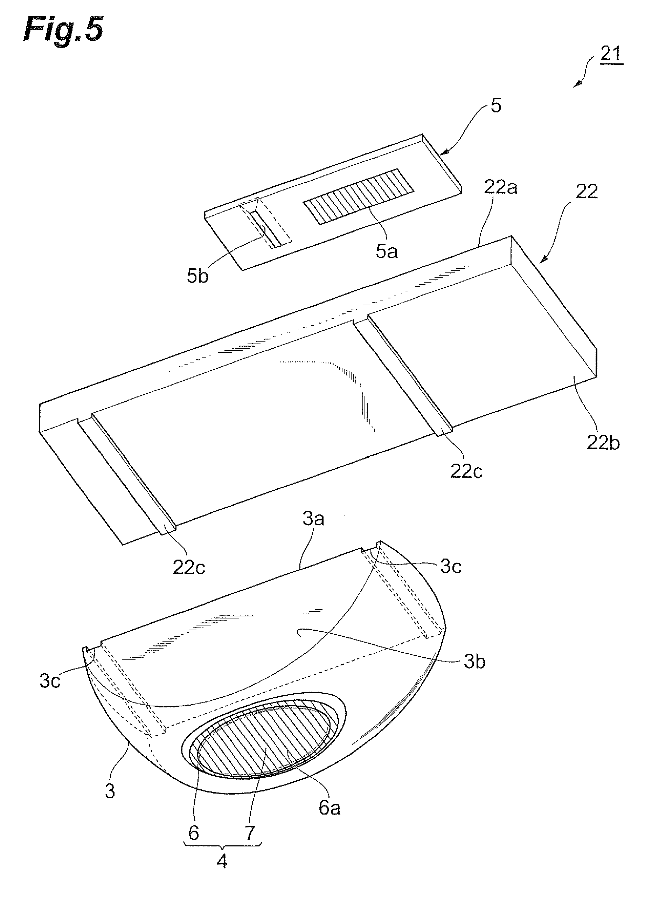

As illustrated in Fig. 5, the rear face (the other surface) 22b of a substrate 22 is provided with two rows of projections (support units) 22c adapted to mate with the recesses 3c of the lens unit 3. The projections 22c are formed so as to extend in a direction substantially orthogonal to the longitudinal direction of the substrate 22 and have predetermined positional relationships with the alignment marks 12a, 12b, 12c, 12d.

The projections 22c mated with the recesses 3c support the lens unit 3 such that the entrance surface 3 a opposes the rear face 22b of the substrate 22, while a gap S which is substantially uniform in the thickness direction of the substrate 2 is formed between the entrance surface 3a of the lens unit 3 and the rear face 22b of the substrate 22.

In the spectral module 21, since the recesses 3c of the lens unit 3 have predetermined positional relationships with the spectroscopic unit 4, simply mating the projections 22c of the substrate 22 with the recesses 3c of the lens unit 3 positions the lens unit 3 and spectroscopic unit 4 with respect to the substrate 22 in the thickness and longitudinal directions of the substrate 22. Here, since the projections 22c of the substrate 22 have predetermined positional relationships with the alignment marks 12a, 12b, 12c, 12d for positioning the photodetector 5, the spectroscopic unit 4 is positioned with respect to the photodetector 5 in the thickness and longitudinal directions of the substrate 22, thus facilitating the alignment between the spectroscopic unit 4 and photodetector 5. Hence, the spectral module 21 can be assembled easily.

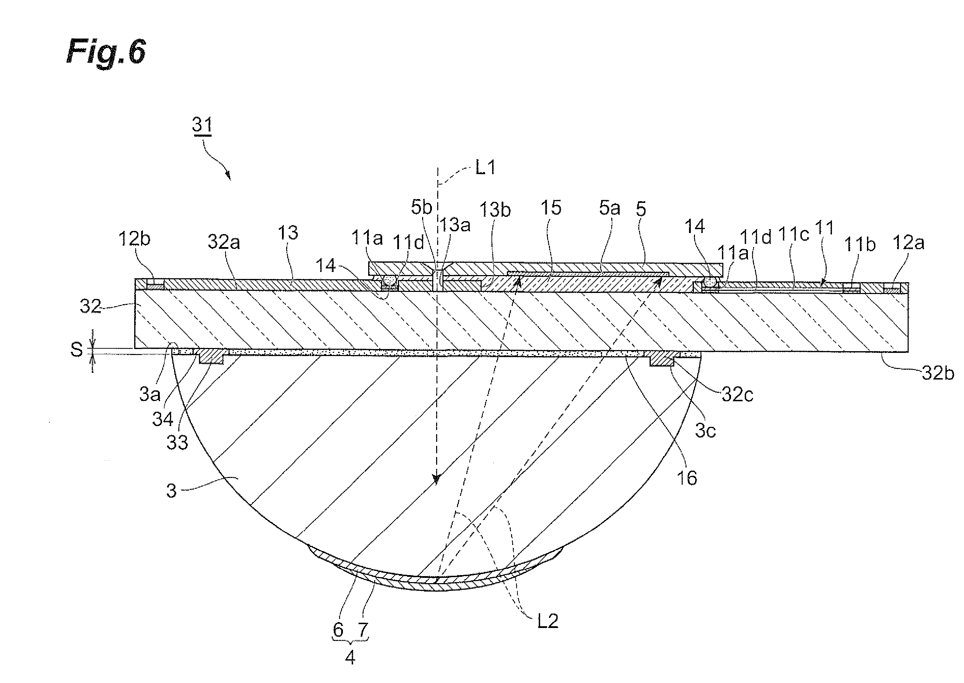

As illustrated in Fig. 6, each of projections (support units) 32c of a substrate 32 may have a leading end portion 33 adapted to mate with its corresponding recess 3c of the lens unit 3 and a tab 34 wider than the leading end portion 33 in the longitudinal direction of the substrate 32. In this case, the tabs 34 stably form the gap S between the entrance surface 3a of the lens unit 3 and the rear face 32b of the substrate 32, whereby the lens unit 3 can be mounted to the substrate 32 with high precision.

### Third Embodiment

In the spectral module 41 in accordance with the third embodiment, the lens unit differs from that of the spectral module 1 in accordance with the first embodiment.

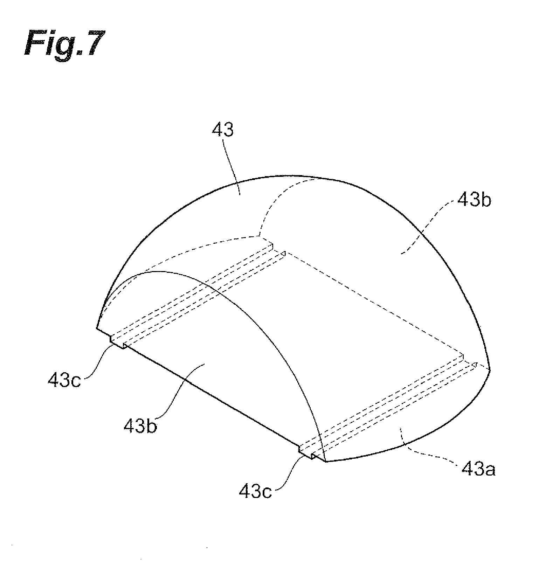

As illustrated in Fig. 7, an entrance surface 43a of a lens unit 43 is provided with two rows of projections (support units) 43c which are adapted to mate with their corresponding recesses 2c of the substrate 2 and extend in a direction substantially orthogonal to side faces 43b of the lens unit 43. The projections 43c are integrally formed with the lens unit 43 by molding or cutting so as to have predetermined positional relationships with the spectroscopic unit 4.

By the projections 43c mated with the recesses 2c of the substrate 2, the lens unit 43 is supported such that the entrance surface 43a opposes the rear face 2b of the substrate 2, while a gap S which is substantially uniform in the thickness direction of the substrate 2 is formed between the entrance surface 43a of the lens unit 43 and the rear face 2b of the substrate 2.

In the spectral module 41, since the projections 43c of the lens unit 43 have predetermined positional relationships with the spectroscopic unit 4, simply mating the projections 43c of the lens unit 43 with the recesses 2c of the substrate 2 positions the spectroscopic unit 4 and lens unit 43 with respect to the substrate 2 in the thickness and longitudinal directions of the substrate 2. Here, since the recesses 2c of the substrate 2 have predetermined positional relationships with the alignment marks 12a, 12b, 12c, 12d for positioning the photodetector 5, the spectroscopic unit 4 is positioned with respect to the photodetector 5 in the thickness and longitudinal directions of the substrate 2, thus facilitating the alignment between the spectroscopic unit 4 and photodetector 5. Hence, the spectral module 41 can be assembled easily.

### Fourth Embodiment

In the spectral module 51 in accordance with the fourth embodiment, the recesses of the substrate and lens unit differ from those in the spectral module 1 in accordance with the first embodiment.

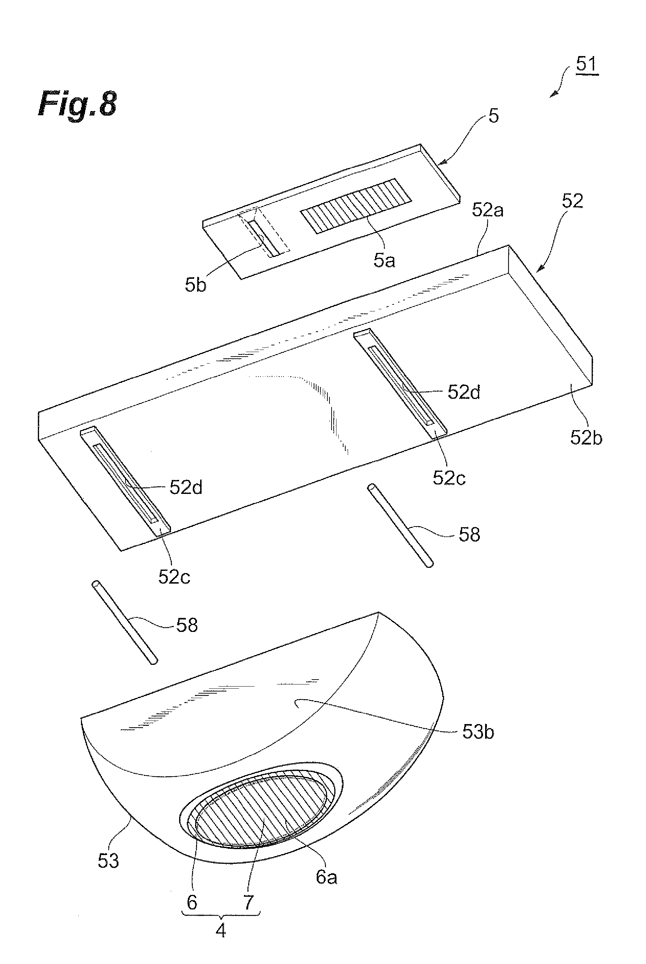

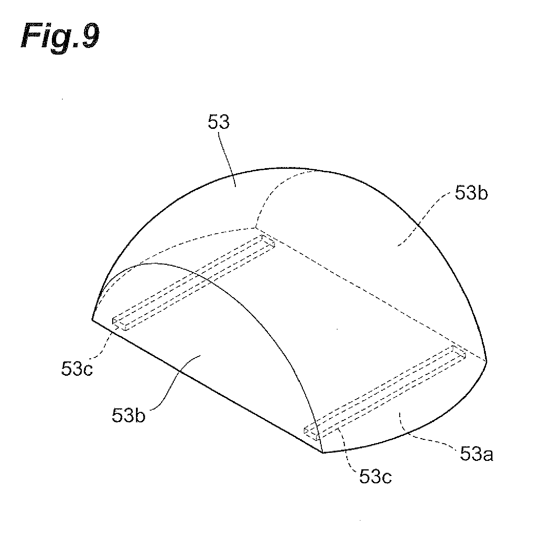

As illustrated in Figs. 8 and 9, by a resin such as a resist or a metal mask, the rear face (the other surface) 52b of a substrate 52 is formed with two projections 52c projecting in the thickness direction of the substrate 52. The projections 52c are formed so as to extend in a direction substantially orthogonal to the longitudinal direction of the substrate 52, while the leading end faces of the projections 52c are provided with recesses (second recesses) 52d, each having a rectangular cross section, adapted to mate with respective rod-shaped support units 58. The recesses 52d, each constituted by a substantially rectangular bottom face and side walls formed so as to surround the bottom face while being substantially perpendicular thereto, are formed so as to have predetermined positional relationships with the alignment marks 12a, 12b, 12c, 12d for positioning the photodetector 5.

An entrance surface 53a of a lens unit 53 is provided with two rows of recesses (first recesses) 53c adapted to mate with their corresponding support units 58. The recesses 53c, each constituted by a substantially rectangular upper face parallel to the entrance surface 53a of the lens unit 53 and side walls formed so as to surround the upper face while being substantially perpendicular thereto, are formed by etching, molding, cutting, or the like, so as to extend in a direction substantially orthogonal to the side faces 53b and have predetermined positional relationships with the spectroscopic unit 4. The projections 52c, 53c of the substrate 52 and lens unit 53 are disposed at positions which do not obstruct paths of the light L1, L2.

The lens unit 53 is supported by the support units 58 such that the entrance surface 53a opposes the rear face 52b of the substrate 52, while a gap S which is substantially uniform in the thickness direction of the substrate 52 is formed between the entrance surface 53a of the lens unit 53 and the rear face 52b of the substrate 52.

In the spectral module 51, since the recesses 52d of the substrate 52 have the side walls formed so as to be substantially perpendicular to their bottom faces and surround the same, while the recesses 53c of the lens unit 53 have the side walls formed so as to be substantially perpendicular to their upper faces and surround the same, simply mating the support units 58 with the recesses 52d, 53c of the substrate 52 and lens unit 53 can position the lens unit 53 with respect to the substrate 52. Since the recesses 52d of the substrate 52 have predetermined positional relationships with the alignment marks 12a, 12b, 12c, 12d for positioning the photodetector 5, while the recesses 53c of the lens unit 53 have predetermined positional relationships with the spectroscopic unit 4, the spectroscopic unit 4 formed with the lens unit 53 is positioned with respect to the photodetector 5 mounted to the substrate 52, whereby the alignment between the spectroscopic unit 4 and photodetector 5 is achieved. Thus, the spectral module 51 attains so-called passive alignment and therefore can be assembled easily.

### Fifth Embodiment

In the spectral module 61 in accordance with the fifth embodiment, the recesses of the substrate and lens unit differ from those in the spectral module 1 in accordance with the first embodiment.

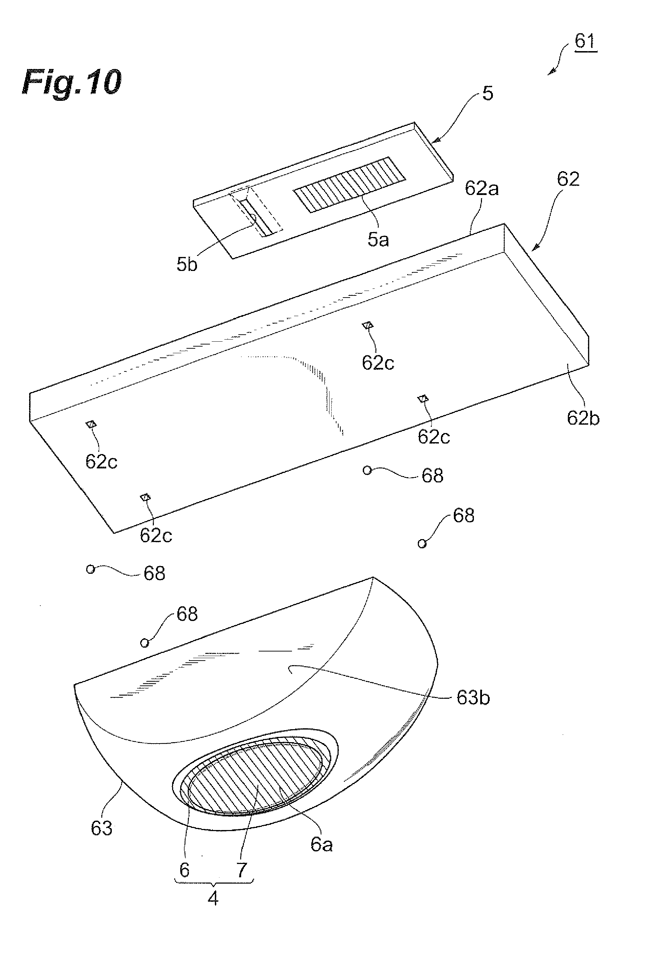

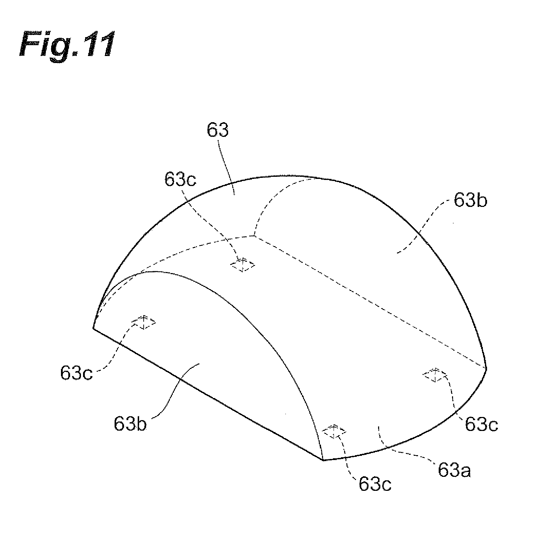

As illustrated in Figs. 10 and 11, the rear face (the other face) 62b of a substrate 62 is provided with four recesses (second recesses) 62c, each recessed into a square pyramid, forming respective vertexes of a rectangle. The recesses 62c are formed so as to have predetermined positional relationships with the alignment marks 12a, 12b, 12c, 12d for positioning the photodetector 5. Spherical support units 68 are mated with their corresponding recesses 62c and partly project in the thickness direction of the substrate 62 by mating with the recesses 62c.

The bottom face 63a of a lens unit 63 is provided with four recesses (first recesses) 63c, each recessed into a square pyramid for mating with its corresponding support unit 68, forming respective vertexes of a rectangle. The recesses 63c are formed so as to have predetermined positional relationships with the spectroscopic unit 4. The recesses 62c, 63c of the substrate 62 and lens unit 63 are disposed at positions which do not obstruct paths of the light L1, L2.

The lens unit 63 is supported by the support units 68 such that the entrance surface 63a opposes the rear face 62b of the substrate 62, while a gap S which is substantially uniform in the thickness direction of the substrate 62 is formed between the entrance surface 63a of the lens unit 63 and the rear face 62b of the substrate 62.

In the spectral module 61, since the recesses 62c of the substrate 62 have predetermined positional relationships with the alignment marks 12a, 12b, 12c, 12d for positioning the photodetector 5, simply mating the support units 68 with the recesses 62c positions the support units 68 with respect to the substrate 62. Since the recesses 63c of the lens unit 63 have predetermined positional relationships with the spectroscopic unit 4, simply mating the support units 68 with the recesses 63c positions the support units 68 with respect to the lens unit 63. Hence, in the spectral module 61, mating the support units 68 with the recesses 62c, 63c of the substrate 62 and lens unit 63 achieves the alignment between the spectroscopic unit 4 and photodetector 5. Thus, the spectral module 61 attains so-called passive alignment and therefore can be assembled easily.

In this spectral module 61, when an optical resin agent is supplied to the gap S between the rear face 62b of the substrate 62 and the entrance surface 63a of the lens unit 63 after positioning the lens unit 63 with respect to the substrate 62, capillary action causes the optical resin agent to flow such as to fill the gap S, so that bubbles can be inhibited from occurring in the resin agent, whereby the lens unit 63 can be secured more reliably to the substrate 62.

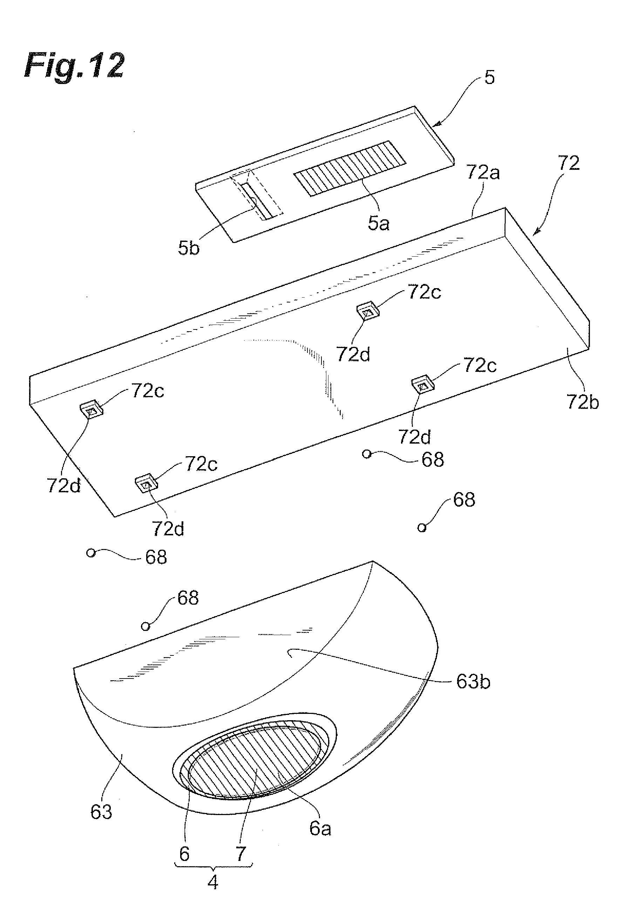

As illustrated in Fig. 12, four projections 72c may be formed on the rear face (the other surface) 72b of the substrate 72 by a resist or metal mask so as to produce respective vertexes of a rectangle, while the leading end faces of the projections 72c may be provided with recesses (second recesses) 72d each recessed into a square pyramid.

The present invention is not limited to the above-mentioned embodiments.

The gap S is divided into both end and center portions of the lens unit by the support units and the like in the first to fourth embodiments, for example, and thus may be filled with the optical resin agent only in the both end portions or center portion. At least one of the substrate and lens unit may be provided with a projection or the like for dividing the gap S, so as to form an area which can selectively be filled with the optical resin agent.

The recesses may have V- or U-shaped cross sections without being limited to rectangular cross sections in the first to fourth embodiments, and may be recessed into rectangular parallelepiped or cylindrical forms without being limited to square pyramids in the fifth embodiment.

The support units may have any of semicircular, triangular, rectangular, and polygonal cross sections and the like in the first to fourth embodiments, and any of rectangular parallelepiped and polyhedral forms without being restricted to spherical forms in the film embodiment.

The number of rows of support units may be 3 or more in the first to fourth embodiments, while the number of support units may be 3 or 5 or more in the fifth embodiment.

The reference units are not limited to the alignment marks 12a, 12b, 12c, 12d; the wiring pattern 11, for example, may be used as a reference unit, so as to position the recesses 2c and photodetector 5. The side faces defining the outer form of the substrate 2, for example, may also be used as reference units.

The structures of substrates, lens units, and supports in the above-mentioned embodiments may be combined as well.

### Industrial Applicability

The present invention can improve the reliability of the spectral module.

### Reference Signs List

1, 21, 31, 51, 61... spectral module; 2, 22, 32, 52, 62, 72... substrate; 2a, 22a, 32a, 52a, 62a, 72a... front face (one surface); 2b, 22b, 32b, 52b, 62b, 72b...rear face (the other surface); 3, 43, 53, 63...lens unit; 4... spectroscopic unit; 5...photodetector; 6... diffraction layer; 6a...grating groove; 7...reflecting layer; 11 ... wiring pattern; 12a, 12b, 12c, 12d... alignment mark (reference unit); 2c, 52d, 62c, 72d...recess (second recess); 3c, 53c, 63c...recess (first recess); 22c, 32c, 43c...projection (support unit); S...gap

## Claims

1. A spectral module comprising:
a substrate for transmitting therethrough light incident on one surface thereof;
a lens unit, having an entrance surface opposing the other surface of the substrate, for transmitting therethrough the light entering from the entrance surface after passing through the substrate;
a spectroscopic unit, formed with the lens unit, for spectrally resolving and reflecting the light having entered the lens unit;
a photodetector, disposed on the side of said one surface of the substrate, for detecting the light reflected by the spectroscopic unit; and
a support unit for supporting the lens unit against the substrate so as to separate the other surface and the entrance surface from each other.

2. A spectral module according to claim 1, wherein the entrance surface is provided with a first recess having a predetermined positional relationship with the spectroscopic unit; and
wherein the support unit is disposed on the other surface side of the substrate so as to have a predetermined positional relationship with a reference unit for positioning the photodetector with respect to the substrate and mated with the first recess.

3. A spectral module according to claim 1, wherein the other surface is provided with a second recess having a predetermined positional relationship with a reference unit for positioning the photodetector with respect to the substrate; and
wherein the support unit is disposed on the entrance surface side of the lens unit so as to have a predetermined positional relationship with the spectroscopic unit and mated with the second recess.

4. A spectral module according to claim 2, wherein the support unit extends in a direction substantially coinciding with an extending direction of a grating groove in the spectroscopic unit.
